# EUROPÄISCHE PATENTSCHRIFT

(11) **EP 2 063 649 B1**
(45) Veröffentlichungstag und Bekanntmachung des Hinweises auf die Patenterteilung: **08.04.2015**
(21) Anmeldenummer: 08169991.0
(22) Anmeldetag: 26.11.2008
(51) Int. Cl.: H04N 13/00

(54) **Stereokamera zur Umgebungserfassung**
Stereo camera to record the environment
Caméra stéréo destinée à la détermination d'un environnement

(30) Priorität: 26.11.2007 DE 102007057172
(43) Veröffentlichungstag der Anmeldung: 27.05.2009
(60) Teilanmeldung: 13157445.1
(73) Patentinhaber: Silicon Micro Sensors GmbH, 01099 Dresden (DE)
(72) Erfinder: Busse, Erik, 04600 Altenburg (DE)
(74) Vertreter: Lippert, Stachow & Partner

(56) Entgegenhaltungen:
- DE-A1- 10 259 795
- DE-A1-102004 010 957
- JP-A- 2006 091 177
- US-B1- 6 392 688

## Beschreibung

Die Erfindung betrifft eine Stereokamera zur Umgebungserfassung mit einem rechten und einem linken Bildsensor, denen jeweils ein Objektiv zur Abbildung der Umgebung auf die Bildsensoren zugeordnet ist, wobei die Bildsensoren durch einen Träger nebeneinander und mit einem Abstand zueinander gehalten sind, und mit einer Leiterplatte, die auf dem Träger angeordnet ist und zumindest die Signal- und Versorgungsleitungen beider Bildsensoren aufweist.

Derartige Stereokameras werden für verschiedene Anwendungen verwendet, um auf der Grundlage der optischen Erfassung und Auswertung der dreidimensionalen Umgebung die Bewegung einer mobilen Vorrichtung zu steuern. Zur Realisierung der möglichen Funktionen der Vorrichtung, zu deren Positionierung und auch zur Vermeidung von Kollisionen bei der Bewegung ist es erforderlich, Gegenstände der Umgebung und deren Abstand zur Vorrichtung laufend zu erfassen und einer Echtzeit-Auswertung zuzuführen.

Die räumliche Erfassung der Umgebung beruht bekanntermaßen auf der synchronen Aufnahme von Bildern mit zwei Aufnahmeeinheiten, die einen, bei Blickrichtung zum Objekt, seitlichen Abstand zueinander aufweisen, so dass von den betreffenden Objekten der Umgebung zwei Bilder aus leicht voneinander abweichenden Richtungen fortlaufend für die Auswertung zur Verfügung stehen. Diese Stereobilder werden einer speziellen Bildverarbeitung unterworfen um die Umgebung fortlaufend dreidimensional zu erfassen.

Der Aufbau einer solchen Stereokamera umfasst regelmäßig zwei elektronische Bildsensoren, denen ein dem jeweiligen Anwendungsfall und auch dem Sensor angepasstes Objektiv zugeordnet ist. Ein Bildsensor und ein Objektiv bilden jeweils eine der oben beschriebenen Aufnahmeeinheiten. Die Bildsensoren sind auf einer Leiterplatte montiert, auf der Signalleitungen, Versorgungsleitungen und gegebenenfalls zumindest Signalvorverarbeitungseinheiten angeordnet sind.

Die Leiterplatte einschließlich der beschriebenen Aufbauten ist auf einem Träger montiert. Über jedem Bildsensor mit dem entsprechend dem optischen System des Objektivs erforderlichen Abstand ist das Objektiv angeordnet. Es ist so auf Träger und Leiterplatte montiert, dass der Bildsensor vollständig umhüllt ist und Licht nur durch die Linsen auf den Bildsensor fällt. Gegebenenfalls weist das Objektiv dafür ein eigenes Gehäuse auf. Dieser grundlegende Aufbau ist mit verschiedenen Ausführungsdetails beispielsweise in der DE 102 59 795 A1 und der US 6,392,688 B1 beschrieben.

Der Träger und ebenso dessen Verbindungen zur Leiterplatte und zum Objektiv oder dessen Gehäuse muss für die verschiedenen Anwendungsfälle unterschiedliche mechanische, thermische, chemische und elektrische Anforderungen erfüllen, wobei insbesondere die mechanische Stabilität für die Verwendung in mobilen Vorrichtungen zu gewährleisten ist. Aus diesem Grund sind die Träger meist aus Metall gefertigt.

Darüber hinaus beeinflusst das thermische Ausdehnungsverhalten des Trägers und der fest auf dem Träger montierten Leiterplatte die mit der Kamera aufgenommenen Bilder. Die unterschiedlichen Ausdehnungskoeffizienten beider miteinander verbundenen Materialien führen aufgrund der durch die elektronischen Komponenten während des Betriebs erzeugten Wärme zu einer Verschiebung der Bildsensoren relativ zu deren Objektiven. Aufgrund dessen werden z.B. bei längerem Betrieb einer Stereokamera Verluste in der Bildqualität festgestellt. Diese Beeinträchtigungen sind zum einen durch eine Verschiebung der optischen Achsen beider Aufnahmeeinheiten relativ zueinander infolge der unterschiedlichen Ausdehnung von Träger und Leiterplatte bedingt. Dadurch überlappen die Stereobilder einander nicht mehr vollständig, so dass eine räumliche Erfassung der Umgebung nur bedingt oder gar nicht mehr möglich ist. Zum anderen sind die Beeinträchtigungen durch Streulicht bedingt, welches durch defekte Verbindungen zwischen dem Träger und dem Objektiv auf 5 einen Bildsensor fällt. Die Verbindung zwischen Träger und Objektiv sind meist Klebeverbindungen, die infolge der thermischen Ausdehnungen von Träger und Objektiv abreißen können.

Der Erfindung liegt somit die Aufgabe zugrunde, eine Stereokamera anzugeben, die eine zeitlich stabile Optik beider Aufnahmeeinheiten für sich und relativ zueinander auch bei thermischer und mechanischer Belastung gewährleistet.

Mit der unten beschriebenen Stereokamera wird eine Beeinflussung der optischen Achsen beider Aufnahmeeinheiten durch die Leiterplatte oder durch die Verbindung von Leiterplatte mit dem Träger bei mechanischer oder thermischer Belastung der Kamera verhindert. Sowohl die Objektive als auch die Bildsensoren weisen eine mechanische Verbindung nur noch zum Träger auf.

Durch diese Entkopplung der Optik von der Leiterplatte kann die Lage und der Winkel der optischen Achse relativ zueinander zeitlich sehr stabil eingestellt werden. Es wurde eine Drift der optischen Achsen von weniger als einem Pixel festgestellt und zwar sowohl bei einer mechanischen Schockbelastung von bis zur 150fachen Erdbeschleunigung als auch bei Betriebstemperaturen im Bereich zwischen -20°C bis 70°C. Diese Werte konnten mit einem Träger erzielt werden, der eine geringere Materialstärke aufweist als die bekannten Träger, so dass insbesondere für hochwertige Materialien eine Kostenersparnis erzielbar ist.

Darüber hinaus sind infolge der Anordnung der Bildsensoren auf Trägersubstraten und infolge einer flexiblen Kontaktierung zwischen Leiterplatte und den Trägersubstraten die bekannten elektronischen Bildsensoren und Objektive verwendbar. So sind in Abhängigkeit von der Gestaltung des Objektivs Bildsensoren sowohl mit Gehäuse als auch ungehäust verwendbar, wobei die gehäusten Bildsensoren es ermöglichen, die Montage der Kamera außerhalb von 5 Reinraumatmosphäre durchzuführen.

Der höheren mechanischen und thermischen Belastungsfähigkeit der Stereokamera wird auch die Montage des Objektivs auf dem Träger gerecht, indem das Objektiv mittels eines Objektivhalters über dem Bildsensor angeordnet ist und dabei einen, mit Ausnahme des optischen Pfades des Objektivs, optisch dichten Hohlraum um den Bildsensor schafft. Damit ist eine großflächigere Befestigung des Objektivs möglich, die bei Einhaltung einer Fuge zwischen beiden zu verbindenden Komponenten und der Verwendung von flexiblem Fugenmaterial zur Herstellung der Verbindung mechanische Spannungen zwischen Träger und Objektivhalter auszugleichen vermag. Auf diese Weise kann das Abreißen der Verbindung über einen großen thermischen und mechanischen Belastungsbereich vermieden werden.

Darüber hinaus gestattet die Herstellung eines Hohlraumes um den Bildsensor auch die Verwendung ungehäuster Bauelemente, sofern es die Leistungsanforderungen an den Bildsensor erfordern. Es ist selbstverständlich, dass innerhalb des Hohlraumes gleichermaßen gehäuste Bauelemente verwendbar sind.

Durch die Anordnung eines Hohlraumes um den Bildsensor und damit um das Trägersubstrat ist es des Weiteren möglich, die flexible elektrische Verbindung zwischen dem Bildsensor und den Leitbahnen der Leiterplatte vor Beschädigungen zu schützen, indem die flexible Verbindung innerhalb des Hohlraumes angeordnet wird. Zu diesem Zweck weist der Objektivhalter einen Durchgang auf, durch welchen die Leiterbahn in den Hohlraum ragt. Um an dieser Stelle eine vergleichbare Verbindung zu realisieren, besteht auch zwischen Objektivhalter und Leiterplatte eine solche Fuge, wie zwischen dem Objektivhalter und dem Träger. Diese Fuge zur Leiterplatte wird auf die gleiche Art verschlossen, wie die übrige zum Träger. Z.B. weist Silikon die erforderlichen Klebeeigenschaften ebenso auf, wie die erforderliche Flexibilität 5 über einen großen Temperaturbereich und die chemische Beständigkeit.

Die Verwendung eines Objektivhalters gestattet es gleichermaßen, in den Objektivhalter Elemente zu integrieren, die eine, gegebenenfalls auch automatisierte, Montage des Objektivs in der richtigen Position und mit dem richtigen Abstand zum Bildsensor zu ermöglichen und diese Position dauerhaft gewährleisten. Solche Elemente sind z.B. Abstandshalter, die einen definierten Abstand zwischen dem Objektivhalter und dem Träger einstellen, so dass das optische System des Objektivs genau auf den Bildsensor eingestellt ist und dessen Abstand über die gesamte Sensorfläche einheitlich ist. Gleichermaßen sind auch Führungselemente zu integrieren, die eine Entsprechung im Träger aufweisen können, so dass die laterale Position des Objektivs zum Bildsensor definiert ist.

Die Erfindung soll nachfolgend anhand eines Ausführungsbeispieles näher erläutert werden. In der zugehörigen Zeichnung zeigt
- Fig. 1: die wesentlichen Komponenten einer Stereokamera in Schnittdarstellung und
- Fig. 2: eine Aufnahmeeinheit einer Stereokamera gemäß Fig. 1 in vergrößerter Darstellung.

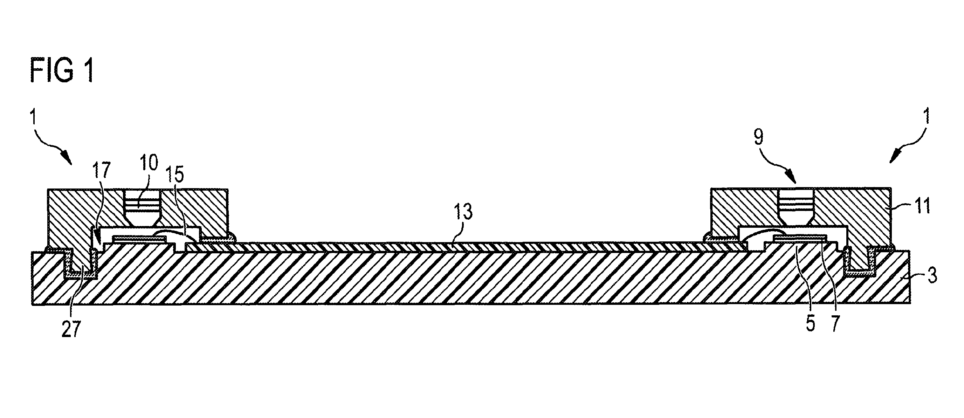

Die Stereokamera gemäß Fig. 1 umfasst einen plattenartigen Träger 3 mit rechteckiger Grundfläche, der im vorliegenden Ausführungsbeispiel aus Edelstahl ist. Der Träger 3 weist an den zwei sich in seiner Längserstreckung gegenüber liegenden Enden jeweils ein Podest 5 auf, auf welchem ein auf einem flachen, nicht näher dargestellten Trägersubstrat 8 ein 6 elektronischer Bildsensor 1 aufliegt. Jedes Podest 5 weist eine Auflagefläche auf, die etwas größer ist als das Trägersubstrat 8.

Über dem Bildsensor 1 und mit einem Abstand zu diesem ist mittels eines Objektivhalters 11 ein Objektiv 9 angeordnet. Ein Bildsensor 1 und ein Objektiv 9 bilden jeweils eine Aufnahmeeinheit. Als Objektiv 9 soll ein optisches System bezeichnet sein, welches verschiedene optische Elemente wie Linsen oder Spiegel oder andere umfasst und ein Objekt auf dem Bildsensor 1 abbildet. Der Fokus der Objektive 9 kann in verschiedenen Ausführungsformen fest eingestellt sein, als Fix-Fokus-System bekannt, oder im eingebauten Zustand einstellbar sein, so dass erst nach dem Einbau des Objektivs 9 entsprechend dem dann vorliegenden Abstand zwischen Objektiv 9 und Bildsensor 1 die scharfe Abbildung von Gegenständen bestimmter Entfernungen eingestellt wird.

Zwischen den beiden Podesten 5 und mit einem Abstand zu ihnen ist auf dem Träger 3 eine Leiterplatte 13 angeordnet, die eine elektronische Schaltung (nicht näher dargestellt) mit integrierten Schaltkreisen, aktiven und passiven Schaltungselementen und den dafür erforderlichen Leiterzügen sowie Leiterbahnen (nicht näher dargestellt) zur Signalleitung zu und von den Bildsensoren 1 sowie zur Spannungsversorgung der Bildsensoren 1 aufweist. Die elektronische Schaltung umfasst z.B. die Steuerung beider Aufnahmeeinheiten unter anderem zur synchronen Aufnahme der Bilder, die Spannungsversorgung der Bildsensoren 1 oder eine Einheit zur Vorverarbeitung der von den Bildsensoren 1 empfangenen Signale, in der die Signale für die Weiterleitung an eine Auswertungseinheit aufbereitet werden. Zur Signalübertragung zwischen diesen Komponenten der Leiterplatte 13 und den Bildsensoren 1 und zur Spannungsversorgung der Bildsensoren 1 ist jedes Trägersubstrat 8 eines Bildsensors 1 über flexible Verbindungen 15 mit der Leiterplatte 13 elektrisch verbunden. Für die flexiblen elektrischen Verbindungen 15 von Bauelementen 7 sind aus der Halbleitertechnologie verschiedene, auch für diese Anwendung geeignete Ausführungsformen bekannt, wie z.B. die Verbindung mittels Drahtbrücken. Die Bildsensoren 1 sind durch die Trägersubstrate 8 elektrisch kontaktiert (nicht näher dargestellt).

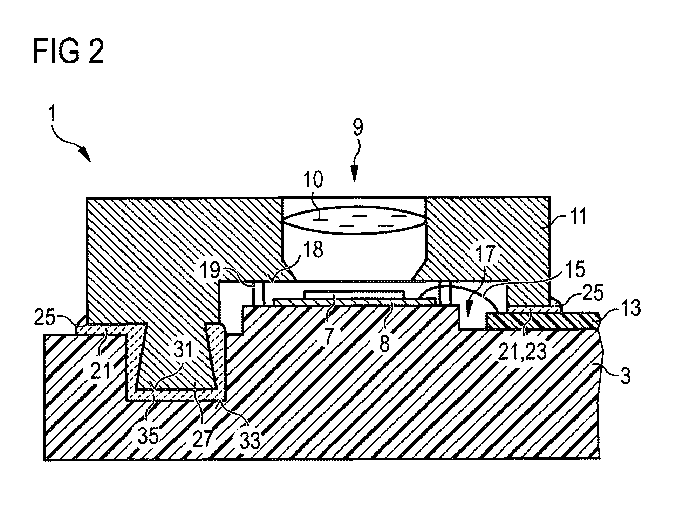

Die Ausführung einer Aufnahmeeinheit ist im Detail in Fig. 2 dargestellt. Der Objektivhalter 11 der Aufnahmeeinheit hält, schützt und positioniert ein Objektiv 9, d.h. ein optisches System zur Abbildung der die mobile Vorrichtung umgebenden Objekte und hat die Form eines Quaders. Das optische System besteht entsprechend der Anforderungen an die Abbildung der Umgebung aus mehreren verschiedenen optischen Elementen, ist hier zur besseren Übersicht jedoch lediglich als eine Linse dargestellt. Für die beschriebene Stereokamera sind auch Standardausführungen von Objektiven 9 verwendbar.

Der Objektivhalter 11 weist auf seiner dem Träger 3 zugewandten Seite eine Senke 17 auf, deren Grundfläche 18 größer ist als das Podest 5, auf welchem der auf einem Trägersubstrat 8 angeordnete Bildsensor 1 aufliegt. Der Objektivhalter 11 ist so auf dem Träger 3 angeordnet, dass sich die Senke 17 über das Podest 5 und den Bildsensor 1 wölbt, mit einem definierten Abstand zwischen der Grundfläche 18 der Senke 17 und dem Bildsensor 1. Der Objektivhalter 11 weist in der Senke 17 und von deren Grundfläche 18 ausgehend stabförmige Auflager 19 auf, die als Abstandshalter dienen und mit denen ein Abstand zwischen Objektiv 9 und Bildsensor 1 eingestellt ist und die den Objektivhalter 11 auf dem Podest 5 neben dem Trägersubstrat 8 abstützen.

Entsprechend der Höhe der Auflager 19 und der Höhe des Podestes 5 ist die Tiefe der Senke 17 so ausgebildet, dass der Objektivhalter 11 umlaufend mit einer Fuge 21 über dem Träger 3 endet, zu diesem aber keinen weiteren direkten mechanischen Kontakt hat, als den über die Auflager 19. Eine ebensolche Fuge 21 weist der Objektivhalter 11 auch zur Leiterplatte 13 auf, die sich durch einen flachen Durchgang 23 im Objektivhalter 11 bis in den Hohlraum erstreckt, der um das Podest 5 durch die Senke 17 gebildet wird. Die Fuge 21 des Objektivhalter 11 zum Träger 3 sowie zur Leiterplatte 13 ist umlaufend mit einem flexiblen Fugenmaterial 5 geschlossen, so dass aufgrund der optisch dichten Materialien des Objektivhalters 11 und des Fugenmaterials 25 der Hohlraum optisch dicht ausgebildet ist, mit dem einzig möglichen Strahlungseinfall durch das über dem Bildsensor 1 positionierte Objektiv 9. Die Verwendung von flexiblem Fugenmaterial 25 ermöglicht den Ausgleich von thermisch bedingten Spannungen zwischen den meist unterschiedlichen Materialien von Träger 3 und Objektivhalter 11. Die optische Dichtheit erstreckt sich nicht nur auf das sichtbare Licht, sondern kann sich auch auf alle die Wellenlängenbereiche beziehen, die für die Erfassung der Umgebung in dem jeweiligen Anwendungsfall verwendbar ist.

Das Fugenmaterial 25 erfüllt in dem dargestellten Ausführungsbeispiel gleichzeitig die Funktion der Befestigung des Objektivhalters 11 auf dem Träger 3, indem es Klebeeigenschaften aufweist. Alternativ können auch besondere Befestigungsmittel am Objektivhalter 11 und am Träger 3 angeordnet sein.

Die Fixierung der genauen lateralen Position des Objektivhalters 11 zum Bildsensor 1 und auch dessen winklige Ausrichtung ist durch die Anordnung von Haltemitteln 27 am Objektivhalter 11 realisiert, die in jeweils eine Aussparung 29 im Träger 3 hineinragen. Durch die Anzahl, Lage und Gestaltung der Haltemittel 27 und Aussparungen 29 ist es möglich, eine eindeutige Zuordnung eines bestimmten Objektivhalters 11 zu einer Aufnahmeeinheit der Stereokammer und zu seiner exakten Position zu definieren, so dass dessen Montage zumindest auch teilautomatisiert möglich ist. So können die Haltemittel 27 und Aussparungen 29 von rechter und linker Aufnahmeeinheit differieren.

Eine Funktion der Haltemittel 27 ist die Fixierung des Objektivhalters 11 in seiner Position auch bei mechanischer Beanspruchung, da diese bei der oben beschriebenen Verklebung von Objektivhalter 11 und Träger 3 mittels flexiblen Material nicht durch die Klebeverbindung zu gewährleisten ist. Zu diesem Zweck sind die Höhe der Haltemittel 27 und die Tiefe der Aussparung 29 so groß gewählt, dass zwischen den beiden sich gegenüber liegenden Grundflächen 31, 33 von Haltemittel 27 und Aussparung 29 ein Abstand verbleibt. Gleichermaßen sind die Querschnitte von Haltemittel 27 und Aussparung 29 überall so groß, dass auch hier umlaufend um das Haltemittel 27 ein Zwischenraum zur seitlichen Wandung der Aussparung 29 verbleibt.

Der das Haltemittel 27 umgebende Abstand und Zwischenraum ist mit einer aushärtbaren Masse verfüllt, die im dargestellten montierten Zustand der Aufnahmeeinheit ausgehärtet ist. Diese Masse führt während ihres Aushärtens, bei dem das Haltemittel 27 in die Masse versenkt ist, infolge des mit dem Aushärten verbundenen Schrumpfungsprozesses, infolge der unten beschriebenen besonderen Form des Haltemittels 27 und infolge des auch unterhalb des Haltemittels 27 vorhandenem Material zu einer Zugbelastung auf das Haltemittel 27 in die Aussparung 29 hinein.

Zur Ausbildung einer Angriffsfläche am Haltemittel 27 für die während des Schrumpfungsprozesses auftretende, in die Aussparung 29 wirkende Kraft ist das Haltemittel 27 so geformt, dass sein Querschnitt, d.h. die zur Grundfläche 31 des Haltemittels 27 parallel liegende, gedachte Schnittfläche, zur Grundfläche 31 hin größer wird. Diese Form des Haltemittels 27 ist z.B. durch eine regelmäßige konische Gestaltung realisierbar. Jedoch auch andere Gestaltungen sind möglich, z.B. ein schiefer oder einseitiger Konus, wie in Fig. 1 dargestellt, oder eine sprunghafte Vergrößerung infolge einer Kante, solange die aushärtbare Masse beim Eintauchen des Haltemittels 27 oder beim nachträglichen Verfüllen des Zwischenraumes in der Aussparung 29 mit der Masse das Haltemittel 27 vollständig umhüllt und die durch das Schrumpfen der Masse nach unten wirkende Zugkraft am Haltemittel 27 eine Angriffsfläche hat.

Auch die zweite der beiden Aufnahmeeinheiten 5 der in Fig. 1 dargestellten Kamera ist im Wesentlichen gleich, jedoch spiegelbildlich zu der in Fig. 2 dargestellten ausgebildet.

### Bezugszeichenliste

- 1: Aufnahmeeinheit
- 3: Träger
- 5: Podest
- 7: Bildsensor
- 8: Trägersubstrat
- 9: Objektiv
- 11: Objektivhalter
- 13: Leiterplatte
- 15: flexible Verbindung
- 17: Senke
- 18: Grundfläche der Senke
- 19: Auflager
- 21: Fuge
- 23: Durchgang
- 25: Fugenmaterial
- 27: Haltemittel
- 29: Aussparung
- 31: Grundfläche des Haltemittels
- 33: Grundfläche der Aussparung
- 35: aushärtbare Masse, aushärtbares Material

## Patentansprüche

1. Stereokamera zur Umgebungserfassung mit einem rechten und einem linken Bildsensor (1), denen jeweils ein Objektiv (9) zur Abbildung der Umgebung auf die Bildsensoren (1) zugeordnet ist, wobei die Bildsensoren (1) durch einen Träger (3) nebeneinander und mit einem Abstand zueinander gehalten sind, und mit einer Leiterplatte (13), die auf dem Träger (3) angeordnet ist und zumindest die Signal- und Versorgungsleitungen beider Bildsensoren (1) aufweist, **dadurch gekennzeichnet, dass** jeder der Bildsensoren (1) auf einem separaten Trägersubstrat (8) montiert ist, die Objektive (9) und beide Trägersubstrate (8) auf dem Träger (3) und beabstandet zur Leiterplatte (13) angeordnet sind und die Bildsensoren (1) mittels flexibler Verbindungen (15) mit den Signal- und Versorgungsleitungen verbunden sind, wobei eine flexible Kontaktierung zwischen Leiterplatte und den Trägersubstraten ausgebildet ist.

2. Stereokamera nach Anspruch 1, **dadurch gekennzeichnet, dass** ein Objektivhalter (11) zumindest eines Objektivs (9) aus optisch dichtem Material besteht und mit dem Träger (3) einen Hohlraum um den Bildsensor (1) bildet, indem der Objektivhalter (11) optisch dicht auf dem Träger (3) montiert ist.

3. Stereokamera nach Anspruch 2, **dadurch gekennzeichnet, dass** der Objektivhalter (11) Auflager (19) aufweist, mit denen der Objektivhalter (11) auf dem Träger (3) liegt, so dass zwischen Objektivhalter (11) und Träger (3) eine Fuge (21) besteht, welche mit flexiblen und optisch dichtem Fugenmaterial (25) verschlossen ist.

4. Stereokamera nach einem der Ansprüche 2 oder 3, **dadurch gekennzeichnet, dass** der Objektivhalter (11) einen Durchgang (23) aufweist, durch welchen die Leiterplatte (13) in den Hohlraum ragt, so dass eine Fuge (21) zwischen dem Objektivhalter (11) und der Leiterplatte (13) besteht und dass die Fuge (21) mit flexiblen und optisch dichtem Fugenmaterial (25) verschlossen ist.

5. Stereokamera nach einem der Ansprüche 3 oder 4, **dadurch gekennzeichnet, dass** das Fugenmaterial (25) Silikon ist.

6. Stereokamera nach einem der Ansprüche 2 bis 5, **dadurch gekennzeichnet, dass** der Objektivhalter (11) Haltemittel (27) aufweist, die sich in Aussparungen (29) im Träger (3) erstrecken und deren parallel zur Grundfläche 15 (33) der Aussparungen (29) liegenden Querschnittflächen zur Grundfläche (33) hin größer werden, dass jedes Haltemittel (27) so weit in eine Aussparung (29) des Trägers (3) ragt, dass zwischen der Grundfläche (31) des Haltemittels (27) und der Grundfläche (33) der Aussparung (29) ein Zwischenraum 20 besteht und dass der das Haltemittel (27) umgebende Raum der Aussparung (29) einschließlich besagten Zwischenraums mit einem aushärtbaren Material (35) ausgefüllt ist.

7. Stereokamera nach einem der vorstehenden Ansprüche, **dadurch gekennzeichnet, dass** der Fokus der Objektive (9) einstellbar ist.

8. Stereokamera nach einem der vorstehenden Ansprüche, **dadurch gekennzeichnet, dass** die Bildsensoren (1) Gehäuse aufweisen.

9. Stereokamera nach einem der vorstehenden Ansprüche, **dadurch gekennzeichnet, dass** der Träger (3) aus Metall besteht.

## Claims

1. Stereo camera for recording surroundings, comprising a right and a left image sensor (1), each of which is assigned a lens (9) for forming an image of the surroundings on the image sensors (1), the image sensors (1) being kept next to one another and at a distance from one another by a carrier (3), and comprising a circuit board (13), which is arranged on the carrier (3) and has at least the signalling and supply lines of the two image sensors (1), **characterized in that** each of the image sensors (1) is mounted on a separate carrier substrate (8), the lenses (9) and both carrier substrates (8) are arranged on the carrier (3) and at a distance from the circuit board (13), and the image sensors (1) are connected to the signalling and supply lines by means of flexible connections (15), resulting in flexible contacting between the circuit board and the carrier substrates.

2. Stereo camera according to Claim 1, **characterized in that** a lens holder (11) of at least one lens (9) consists of optically dense material and with the carrier (3) forms a cavity around the image sensor (1), **in that** the lens holder (11) is mounted on the carrier (3) in an optically dense manner.

3. Stereo camera according to Claim 2, **characterized in that** the lens holder (11) has supports (19), by which the lens holder (11) rests on the carrier (3), so that between the lens holder (11) and the carrier (3) there is a joint (21), which is sealed with flexible and optically dense joint material (25).

4. Stereo camera according to either of Claims 2 and 3, **characterized in that** the lens holder (11) has a passage (23), through which the circuit board (13) protrudes into the cavity, so that there is a joint (21) between the lens holder (11) and the circuit board (13), and **in that** the joint (21) is sealed with flexible and optically dense joint material (25).

5. Stereo camera according to either of Claims 3 and 4, **characterized in that** the joint material (25) is silicone.

6. Stereo camera according to one of Claims 2 to 5, **characterized in that** the lens holder (11) has holding means (27), which extend into recesses (29) in the carrier (3) and the cross-sectional areas of which, lying parallel to the base area (33) of the recesses (29), increase in size towards the base area (33), **in that** each holding means (27) protrudes into a recess (29) of the carrier (3) to such an extent that there is an intermediate space between the base area (31) of the holding means (27) and the base area (33) of the recess (29), and **in that** the space of the recess (29) that surrounds the holding means (27), including said intermediate space, is filled with a curable material (35).

7. Stereo camera according to one of the preceding claims, **characterized in that** the focus of the lenses (9) is adjustable.

8. Stereo camera according to one of the preceding claims, **characterized in that** the image sensors (1) have housings.

9. Stereo camera according to one of the preceding claims, **characterized in that** the carrier (3) consists of metal.

## Revendications

1. Caméra stéréoscopique destinée à détecter l'environnement, comportant des capteurs d'images droit et gauche (1) à chacun desquels est associé un objectif (9) pour former l'image de l'environnement sur les capteurs d'images (1), dans lequel les capteurs d'images (1) sont maintenus par l'intermédiaire d'un support (3) l'un à côté de l'autre et à une certaine distance l'un de l'autre, et comportant un circuit imprimé (13) qui est disposé sur le support (3) et comprend au moins les lignes de signaux et d'alimentation des deux capteurs d'images (1), **caractérisée en ce que** chacun des capteurs d'images (1) est monté sur un substrat de support (8) séparé, **en ce que** les objectifs (9) et les deux substrats de support (8) sont disposés sur le support (3) et de manière espacée du circuit imprimé (13) et **en ce que** les capteurs d'images (1) sont connectés aux lignes de signaux et d'alimentation au moyen de connexions souples (15), dans lequel un système de contact souple est créé entre le circuit imprimé et les substrats de support.

2. Caméra stéréoscopique selon la revendication 1, **caractérisée en ce qu'**un manchon d'objectif (11) d'au moins un objectif (9) est constitué d'un matériau optiquement opaque et forme avec le support (3) un espace vide autour du capteur d'images (1) en raison du fait que le manchon d'objectif (11) est monté de manière optiquement opaque sur le support (3).

3. Caméra stéréoscopique selon la revendication 2, **caractérisée en ce que** le manchon d'objectif (11) comprend des surfaces d'appui (19) au moyen desquelles le manchon d'objectif (11) repose sur le support (3), de manière à ce qu'un joint (21) qui est fermé hermétiquement par un matériau de joint (25) souple et optiquement opaque soit présent entre le manchon d'objectif (11) et le support (3).

4. Caméra stéréoscopique selon l'une quelconque des revendications 2 ou 3, **caractérisée en ce que** le manchon d'objectif (11) présente un passage (23) à travers lequel le circuit imprimé (13) fait saillie dans l'espace vide, de manière à ce qu'un joint (21) entre le manchon d'objectif (11) et le circuit imprimé (13) soit présent et à ce que le joint (21) soit fermé hermétiquement par un matériau souple et optiquement opaque (25).

5. Caméra stéréoscopique selon l'une quelconque des revendications 3 ou 4, **caractérisée en ce que** le matériau de joint (25) est de la silicone.

6. Caméra stéréoscopique selon l'une quelconque des revendications 2 à 5, **caractérisée en ce que** le manchon d'objectif (11) comprend des moyens de maintien (27) qui s'étendent dans des évidements (29) ménagés dans le support (3) et dont les sections transversales s'étendant parallèlement à la surface de base (33) des évidements (29) s'agrandissent vers la surface de base (33), **en ce que** chaque moyen de maintien (27) fait saillie dans un évidement (29) du support (3) à une distance telle que, entre la surface de base (31) du moyen de maintien (27) et la surface de base (33) de l'évidement (29) soit présent un espace intermédiaire et **en ce que** l'espace entourant le moyen de maintien (27) de l'évidement (29), y compris ledit espace intermédiaire, soit rempli d'un matériau durcissable (35).

7. Caméra stéréoscopique selon l'une quelconque des revendications précédentes, **caractérisée en ce que** le foyer de l'objectif (9) est réglable.

8. Caméra stéréoscopique selon l'une quelconque des revendications précédentes, **caractérisée en ce que** les capteurs d'images (1) comprennent des boîtiers.

9. Caméra stéréoscopique selon l'une quelconque des revendications précédentes, **caractérisée en ce que** le support (3) est constitué de métal.
